(19) Europäisches Patentamt
European Patent Office
Office européen des brevets

(11) **EP 4 421 899 A1**

(12) **EUROPEAN PATENT APPLICATION**
published in accordance with Art. 153(4) EPC

(43) Date of publication:
**28.08.2024 Bulletin 2024/35**

(21) Application number: **23841168.0**

(22) Date of filing: **30.08.2023**

(51) International Patent Classification (IPC):
**H01M 4/133** $^{(2010.01)}$  **H01M 4/587** $^{(2010.01)}$
**H01M 10/0525** $^{(2010.01)}$

(52) Cooperative Patent Classification (CPC):
Y02E 60/10

(86) International application number:
**PCT/CN2023/115701**

(87) International publication number:
**WO 2024/148830 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.01.2023 CN 202310030037**

(71) Applicant: **Sunwoda Mobility Energy Technology
Co., Ltd.
Shenzhen, Guangdong 518107 (CN)**

(72) Inventors:
• LIU, Peng
  Shenzhen
  Guangdong 518107 (CN)
• CHEN, Yun
  Shenzhen
  Guangdong 518107 (CN)
• LI, Man
  Shenzhen
  Guangdong 518107 (CN)
• CHU, Chunbo
  Shenzhen
  Guangdong 518107 (CN)

(74) Representative: **Herrero & Asociados, S.L.
Edificio Aqua - Agustín de Foxá, 4-10
28036 Madrid (ES)**

(54) **SECONDARY BATTERY AND BATTERY PACK**

(57) Disclosed are a secondary battery and a battery pack, in which a non-Faraday capacitance of a negative electrode plate and a grain size of a negative electrode active material are controlled to be within a predetermined range, so that the negative electrode plate and the secondary battery have good rate capability, and in which a dispersion degree of the positive electrode active material and a dispersion degree of the negative electrode active material are controlled to be within a predetermined range, so that the secondary battery can have high rate capability and high energy density.

## Description

The present disclosure claims priority to Chinese Patent Application No. 202310030037.8, filed on January 9, 2023, entitled "Secondary Batteries and Battery Packs", the content of which is incorporated herein by reference in its entirety.

## TECHNICAL FIELD

The present disclosure relates to the field of batteries, and more particularly, to a secondary battery and a battery pack.

## BACKGROUND

With the rapid development of electric automobiles and digital electronics, there is a need for power-type secondary batteries with higher power density and energy density and suitable for rapid charging and discharging to be applied to the electric automobiles and electronic products. For the secondary battery, such as a lithium-ion battery, increasing the energy density of the lithium-ion battery is one of the direct and effective ways to increase the life of the lithium-ion battery.

The secondary battery with high energy density requires a higher material press density and fewer auxiliary materials to provide space for active materials. However, the secondary battery with high rate discharge performance requires a lower material press density, more conductive materials, and a thicker current collector to ensure the high rate discharge performance, and to avoid the decline in cycle performance caused by high temperature and lithium precipitation.

Therefore, there is a need to provide a secondary battery that has high rate capability without affecting the energy density thereof.

## TECHNICAL SOLUTION

A first aspect of the present disclosure provides a secondary battery including a negative electrode plate, wherein the negative electrode plate includes a negative electrode current collector and a negative electrode active material layer disposed on at least one surface of the negative electrode current collector, the negative electrode active material layer includes a negative electrode active material, the negative electrode active material includes a carbon material, wherein a grain size of the negative electrode active material is XS nm; a non-Faraday capacitance of the negative electrode plate is

$$0.1 \leq \sqrt{Cdl - XS} \leq 3$$

Cdl nF, satisfying $0.05 < Cdl < 10$; .

In some embodiments, XS satisfies $0.01 \leq XS \leq 6$.

In some embodiments, the negative electrode active material has a pore volume of $\alpha$ cm$^3$/g, satisfying

$0.5 \leq Cd1 + 10 \times \alpha \leq 8$.

In some embodiments, the negative electrode active material has a pore volume of $\alpha$ cm$^3$/g, satisfying $0.001 \leq \alpha \leq 0.5$.

In some embodiments, the negative electrode active material has a powder resistivity of R Q cm at 20 KN, satisfying $0.01 \leq 10R/Cd1 \leq 5$.

In some embodiments, the negative electrode active material has a powder resistivity of R Q cm at 20KN, satisfying $0.002 \leq R \leq 2$.

In some embodiments, the secondary battery further includes a positive electrode plate, the positive electrode plate includes a positive electrode current collector and a positive electrode active material layer disposed on at least one surface of the positive electrode current collector, and the positive electrode active material layer includes a positive electrode active material.

In some embodiments, the negative electrode active material has a particle dispersion degree A, the positive electrode active material has a particle dispersion degree B, and the A and B satisfy at least one of the following: (a) $0.5 \leq A \leq 2.5$; (b) $1.0 \leq B \leq 5.0$; (c) $0.5 \leq B/A \leq 2.5$.

In some embodiments, the negative electrode active material layer has a thickness of C $\mu$m, the positive electrode active material layer has a thickness of D $\mu$m, and the C and D satisfy at least one of the following: (i) $99 \leq C \leq 160$; (ii) $80 \leq D \leq 130$; (iii) $0.1 \leq 1-(D/C) \leq 0.5$.

In some embodiments, a surface of the negative electrode active material is coated with a first coating layer having a thickness of H1 nm, $5 \leq H1 \leq 200$, $10 \leq Cd1 \times H1 \leq 250$.

In some embodiments, a surface of the positive electrode active material is coated with a second coating layer having a thickness of H2 nm, $5 \leq H2 \leq 60$.

Meanwhile, a second aspect of the present disclosure further provides a battery pack including the secondary battery as described above.

## BRIEF DESCRIPTION OF THE DRAWINGS

FIG. 1 is a fitted curve of a sweep speed-current scatter plot of a negative electrode plate prepared in Example 1 of the present disclosure.
FIG. 2 is a test result of secondary batteries prepared in Examples 1 to 20 of the present disclosure.
FIG. 3 is a test result of secondary batteries prepared in Examples 21 to 30 and Comparative Examples 1 to 4 of the present disclosure.
FIG. 4 is a diagram showing results of test data, cycle performance, and rate capability of secondary batteries prepared in Examples 1 to 20 of the present disclosure.
FIG. 5 is a diagram showing results of test data, cycle performance, and rate capability of secondary batteries prepared in in Examples 21 to 30 and Comparative Examples 1 to 4 of the present disclosure.

DETAILED DESCRIPTION OF THE EMBODIMENTS

The present disclosure provides a secondary battery and a battery pack. To make the objective, technical solutions, and effect of the present disclosure clear and explicit, the present disclosure will be described in further detail below with reference to the accompanying drawings and embodiments. It is to be understood that the specific embodiments described herein are merely illustrative of the present disclosure and are not intended to limit the present disclosure.

Embodiments of the present disclosure provide a secondary battery and a battery pack having the same. By controlling the non-Faraday capacitance of a negative electrode plate to be within a predetermined range, and simultaneously controlling the grain size of a negative electrode active material and the non-Faraday capacitance of the negative electrode plate to be within the predetermined range, the number of electrochemical active sites on the surface of the negative electrode plate in the secondary battery is increased, which facilitates the contact of the negative electrode active material with an electrolyte, accelerates the conduction rate of ions and electrons, reduces the charge transmission resistance, increases the actual contact area of the negative electrode plate with the electrolyte, shortens the ion-electron transmission distance, increases the number of reactive sites on the surface of the negative electrode plate, and improves the non-Faraday reaction strength, so that the secondary battery has a less charge transmission resistance, thereby greatly improving the rate capability of the secondary battery.

An embodiment of the present disclosure provides a secondary battery including a positive electrode plate, a negative electrode plate, a separator, an electrolyte, and a housing.

The negative electrode plate includes a negative electrode current collector and a negative electrode active material layer disposed on at least one surface of the negative electrode current collector. The negative electrode active material layer comprises a negative electrode active material. The negative electrode active material includes a carbon material.

The negative electrode plate may be a single-sided electrode plate or a double-sided electrode plate. When the negative electrode plate is a single-sided electrode plate, the negative electrode active material layer is provided on one surface of the negative electrode current collector, and when the negative electrode plate is a double-sided electrode plate, the negative electrode active material layer is provided on both surfaces of the negative electrode current collector. Further, the negative electrode plate may have both a region of single-sided negative electrode plate and a region of double-sided negative electrode plate.

In some embodiments, the negative electrode active material includes graphite. In some embodiments, the grain size XS of the negative electrode active material and the non-Faraday capacitance Cdl of the negative electrode plate satisfy: $0.1 \leq \sqrt{Cdl - XS} \leq 3$. Specifically, the value of $\sqrt{Cdl - XS}$ may be 0.1, 0.2, 0.3, 0.4, 0.5, 0.6, 0.7, 0.8, 0.96, 1.0, 1.5, 2.0, 2.5, 3.0, or a range of any two of these numerical values. When the negative electrode plate satisfies the above relationship, the negative electrode plate may have a short ion transmission path and a fast electrochemical reaction, thereby achieving a high-rate discharge capability. When the negative electrode plate satisfies the above relationship, the electrolyte infiltration, surface impedance, and high-rate charge/discharge capability of the negative electrode plate are all in a desired state, and the expansion of the negative electrode plate during cycling may be reduced.

In some embodiments, a relationship of XS and Cdl is: $0.5 \leq \sqrt{Cdl - XS} \leq 2.2$. When the negative electrode plate satisfies the above relationship, the morphology of the negative electrode active material and the internal structure of the negative electrode plate can be further optimized, so that the overall performance of the secondary battery is improved.

In some embodiments, the relationship of XS and Cdl is: $0.7 \leq \sqrt{Cdl - XS} \leq 2$. When the negative electrode plate satisfies the above relationship, the actual contact area between the negative electrode plate and the electrolyte may be further adjusted, the ion-electron transmission distance is shortened, the number of reactive sites on the surface of the negative electrode plate is increased, the non-Faraday reaction strength is increased, and the charge transmission resistance is reduced, so that the overall performance of the secondary battery is improved.

In some embodiments, the non-Faraday capacitance of the negative electrode plate is Cdl nF in a range of $0.05 \leq Cdl \leq 10$. Specifically, Cdl is 0.05, 0.1, 0.15, 0.2, 0.3, 0.4, 0.5, 0.6, 0.7, 0.8, 0.9, 1.0, 1.5, 2.0, 2.5, 3.0, 3.5, 4.0, 4.5, 5.0, 5.5, 6.0, 6.5, 7.0, 7.5, 8.0, 8.5, 9.0, 9.5, 10, or a range of any two of these numerical values. The Faraday reaction in the secondary battery refers to a process in which the oxidation state of an active material is changed, and charge is transferred to the inside of the active material through an electrode interface across two charge layers. The non-Faraday reaction refers to a reaction in which ions are physically adsorbed or detached from the electrode surface to store and release charges, without a charge moving across the electrode interface. The non-Faraday capacitance Cdl indicates the number of electrochemical active sites in the negative electrode plate. In a certain range, the increase of Cdl and the number of electrochemical active sites may facilitate the contact of the negative electrode active material with the electrolyte, accelerate the ion-electron conduction rate, reduce the charge transport resistance, and effectively improve the rate capability of the secondary battery.

In some embodiments, it satisfies $0.1 \leq Cdl \leq 10$. When the non-Faraday capacitance value of the negative electrode plate is in the above range, the overall performance of the secondary battery is further improved.

In some embodiments, it satisfies $0.5 \leq Cdl \leq 9$. When the non-Faraday capacitance value of the negative electrode plate is in the above range, the internal structure of the negative electrode plate can be further optimized so that the number of electrochemical active sites on the surface of the negative electrode plate is in a desired range, thereby further improving the overall performance of the secondary battery.

In some embodiments, it satisfies $1.5 \leq Cdl \leq 8.0$. When the non-Faraday capacitance value of the negative electrode plate is in the above range, the overall performance of the secondary battery can be better balanced, thereby achieving a better performance thereof.

In some embodiments, the grain size of the negative electrode active material is XS nm in a range of $0.01 \leq XS \leq 6$. Specifically, XS is 0.01, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 1.0, 1.5, 2.0, 2.5, 3.0, 3.5, 4.0, 4.5, 5.0, 5.5, 6.0, or a range of any two of these numerical values. The grain size XS can be obtained by refining XRD pattern of the negative electrode active material, and the conditions for testing XRD are as follows: step scanning is performed with a step size of $\leq 0.02°$, a residence time of $\geq 2s$, and a scanning range of 10° to 90°.

The conduction characteristics of electrons affect the rate capability of the secondary battery, and the grain size XS can affect cycling of the secondary battery at high voltage and high temperature, and capacity exertion at high current. It is found that when the charge transfer activation energy and ion diffusion activation energy of the negative electrode active material increase, the reaction between the negative electrode plate and the electrolyte at the interface may be inhibited to some extent, affecting the performance of the negative electrode active material. Controlling the grain size XS of the negative electrode active material can affect the actual contact area between the negative electrode plate and the electrolyte, shorten the ion-electron transmission distance, increase the number of reactive active sites on the surface, increase the non-Faraday reaction strength, and have a lower charge transfer resistance, thereby greatly improving the rate capability of the secondary battery. The grain size may be regulated by controlling the particle size of the negative electrode active material, graphitization temperature, graphitization time, doping modification, or other means. Therefore, a relationship between the grain size XS of a non-negative electrode active material of the negative electrode plate and the non-Faraday capacitance Cdl thereof may be controlled to be: $0.1 \leq \sqrt{Cdl - XS} \leq 3$. When $0.01 \leq XS \leq 6$, the grain size of the negative electrode active material and the number of reactive sites on the negative electrode plate are in a preferable range, which can make the contact state between the negative electrode plate and the electrolyte better, so that the electrochemical reaction in the secondary battery is in a better state, and the overall performance of the secondary battery can be further improved. Furthermore, it is possible to alleviate a defect that in the secondary battery, due to the increase in the temperature during use, the pore size of the surface of the negative electrode active material increases, the specific surface area decreases, the contact area between the electrolyte and the negative electrode active material decreases, and the number of reaction sites on the surface decreases, so that the non-Faraday reaction strength on the surface of the negative electrode plate decreases, the diffusion capacity and surface reaction decrease, and thus the overall electrochemical performance of the electrode material decreases.

In some embodiments, the grain size of the negative electrode active material is XS nm in a range of $0.1 \leq XS \leq 5.5$. When the grain size of the negative electrode active material satisfies the above range, the cycling under high voltage and high temperature and the capacity exertion under high current of the negative electrode active material is in a preferable state, and the actual contact area between the electrolyte and the particles of the negative electrode active material is in a more reasonable range, so that the overall performance of the secondary battery is better.

In some embodiments, the grain size of the negative electrode active material is XS nm in a range of $0.2 \leq XS \leq 5$. When the grain size of the negative electrode active material satisfies the above range, the overall performance of the secondary battery can be further improved.

In some embodiments, the grain size of the negative electrode active material is XS nm in a range of $0.4 \leq XS \leq 4.5$.

In some embodiments, the grain size of the negative electrode active material is XS nm in a range of $0.4 \leq XS \leq 4.2$.

In some embodiments, the grain size of the negative electrode active material is XS nm in a range of $0.52 \leq XS \leq 3.9$.

In some embodiments, a relationship between a pore volume $\alpha$ cm³/g of the negative electrode active material and the non-Faraday capacitance Cdl nF of the negative electrode plate is: $0.5 \leq Cdl + 10 \times \alpha \leq 8$. Specifically, the value of $Cdl + 10 \times \alpha$ is 0.5, 1.0, 1.5, 2.0, 2.5, 3.0, 3.5, 4.0, 4.5, 5.0, 5.5, 6.0, 6.5, 7.0, 7.5, 8.0, or a range of any two of these numerical values. Pore volume $\alpha$ cm³/g refers to the total pore volume per unit mass of porous solid. When $Cdl + l10 \times \alpha$ is in the above range, the pore structure of the negative electrode active material is rich, which improves the contact area between the negative electrode plate and the electrolyte, and shortens the transmission path of lithium ions, so that the electrolyte can rapidly infiltrates, and lithium ions can be quickly embedded or detached from the surface of the negative electrode material, thereby accelerating the reaction kinetics, and reducing the polarization of the negative electrode surface. Therefore, the current distribution is more uniform, and more negative electrode active materials participate in accepting $Li^+$ at the time of high-rate rapid charging, thereby effectively avoiding lithium precipitation on the negative electrode surface.

In some embodiments, the relationship between the pore volume $\alpha$ $cm^3/g$ of the negative electrode active material and the non-Faraday capacitance Cdl nF of the negative electrode plate is $0.8 \leq Cdl+10 \times \alpha 6.8$. When Cdl+l10×$\alpha$ is in the above range, the negative electrode plate can provide sufficient electrochemical reactive sites in the electrochemical process, accelerate the non-Faraday reaction process of the negative electrode, facilitate the transmission of electrons and ions between a solid phase and a liquid phase, improve the electrochemical reaction kinetics, and further improve the rate capability of the material.

In some embodiments, the relationship between the pore volume $\alpha$ $cm^3/g$ of the negative electrode active material and the non-Faraday capacitance Cdl nF of the negative electrode plate is $1.1 \leq Cdl+10 \times \alpha \leq 6.2$.

In some embodiments, the relationship between the pore volume $\alpha$ $cm^3/g$ of the negative electrode active material and the non-Faraday capacitance Cdl nF of the negative electrode plate is $1.3 \leq Cdl+10 \times \alpha \leq 5.9$. When Cdl+10×$\alpha$ is in the above range, the pore structure of the negative electrode active material can be further optimized, the non-Faraday reaction of the negative electrode plate can be enhanced, and the overall performance of the secondary battery can be further improved.

In some embodiments, the pore volume of the negative electrode active material is $\alpha$ $cm^3/g$ in a range of $0.001 \leq \alpha \leq 0.5$. Specifically, $\alpha$ is 0.001, 0.005, 0.01, 0.15, 0.2, 0.25, 0.3, 0.35, 0.4, 0.45, 0.5, or a range of any two of these numerical values. When the pore volume of the negative electrode active material is within the above range, the pore structure of the particles of the negative electrode active material is rich, which not only increases the contact area between the negative electrode plate and the electrolyte, but also shortens the transmission path of lithium ions, so that the electrolyte can rapidly infiltrates to provide a smooth charge transmission path for the solid-liquid interface, the diffusion energy barrier is reduced, and thus lithium ions can be quickly embedded into and detached from the surface of the negative electrode active material, and thus the reaction kinetics is accelerated.

In some embodiments, the pore volume of the negative electrode active material is $\alpha$ $cm^3/g$ in a range of $0.005 \leq \alpha \leq 0.45$.

In some embodiments, the pore volume of the negative electrode active material is $\alpha$ $cm^3/g$ in a range of $0.008 \leq \alpha \leq 0.42$.

In some embodiments, the pore volume of the negative electrode active material is $\alpha$ $cm^3/g$ in a range of $0.01 \leq \alpha \leq 0.38$. When the pore volume of the negative electrode active material is within the above range, the pore structure of the particles of the negative electrode active material can be further optimized, and the overall performance of the secondary battery can be improved.

In some embodiments, the pore volume of the negative electrode active material is $\alpha$ $cm^3/g$ in a range of $0.05 \leq \alpha \leq 0.38$.

In some embodiments, the pore volume of the negative electrode active material is $\alpha$ $cm^3/g$ in a range of $0.08 \leq \alpha \leq 0.38$.

In some embodiments, the pore volume of the negative electrode active material is $\alpha$ $cm^3/g$ in a range of $0.1 \leq \alpha \leq 0.38$.

In some embodiments, the pore volume of the negative electrode active material is $\alpha$ $cm^3/g$ in a range of $0.12 \leq \alpha \leq 0.38$. When the pore volume $\alpha$ of the negative electrode active material is in the above range, the active sites on the surface of the negative electrode plate are rich, which facilitates charge exchange of lithium ions on the surface of the negative electrode active material and improves the rate capability of the lithium ion battery. Moreover, the diffusion of lithium ions into the cathode active material is facilitated, the solid-state conductivity of lithium ions is improved, the impedance of the secondary battery is reduced, and the service life of the secondary battery is prolonged.

In some embodiments, the negative electrode active material has a powder resistivity of R $\Omega \cdot cm$ at 20 KN. In some embodiments, a relationship between R and Cdl is: $0.01 \leq 10R/Cdl \leq 5$. Specifically, the value of 10R/Cdl is 0.01, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0, 1.5, 2.0, 2.5, 3.0, 3.5, 4.0, 4.5, 5.0, or a range of any two of these numerical values. When the negative electrode plate satisfies the above relationship, the electron conductivity of the negative electrode active material is high, the interface resistance between the electrolyte and the negative electrode active material is low, and the polarization of the secondary battery is less, so that the cycle performance and the rate capability of the secondary battery can be improved.

In some embodiments, the powder resistivity of the negative electrode active material is R Q cm at 20 KN. In some embodiments, the relationship between R and Cdl is: $0.12 \leq 10R/Cdl \leq 4.3$.

In some embodiments, the powder resistivity of the negative electrode active material is R Q cm at 20 KN. In some embodiments, the relationship between R and Cdl is: $0.18 \leq 10R/Cdl \leq 3.9$.

In some embodiments, the powder resistivity of the negative electrode active material is R Q cm at 20 KN, $0.002 \leq R \leq 2$. Specifically, R is 0.002, 0.005, 0.01, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0, 1.5, 2.0, or a range of any two of these numerical values. When the powder resistivity of the negative electrode active material at 20 KN satisfies the above range, the negative electrode plate can have better conductive performance, and to some extent, influence the performance of the negative electrode plate, so that the overall performance of the secondary battery is better.

In some embodiments, the powder resistivity of the negative electrode active material is R Q cm at 20 KN, 0.008≤R≤1.8.

In some embodiments, the powder resistivity of the negative electrode active material is R Q cm at 20 KN, 0.011≤R≤1.4.

In some embodiments, the powder resistivity of the negative electrode active material is R Q cm at 20 KN, 0.021≤R≤1.4.

The powder resistivity R of the negative electrode active material can be measured by a four-probe method described in GB/T 39978-2021.

In some embodiments, the negative electrode active material has a particle dispersion degree of A, and in some embodiments, 0.5≤A≤2.5. Specifically, A is 0.5, 0.8, 1.0, 1.2, 1.5, 1.8, 2.0, 2.3, 2.5, or a range of any two of these numerical values.

In some embodiments, the negative electrode active material has a particle dispersion degree of A, and in some embodiments, 0.7≤A≤2.

In some embodiments, the negative electrode active material has a particle dispersion degree of A, and in some embodiments, 0.7≤A≤1.9. The particle dispersion is equal to (D99-D10)/D50, where D99 denotes the particle size of active material particles having a cumulative volume distribution of 99%, D10 denotes the particle size of active material particles having a cumulative volume distribution of 10%, and D50 denotes the particle size of active material particles having a cumulative volume distribution of 50%. The particle dispersion degree is used for characterizing the dispersion degree of components with various particle sizes. Small particle dispersion degree indicates that the particle size distribution is centralized, the powder disperses well during a stirring process, the slurry is not prone to settling, and the obtained slurry has a good uniformity and stability, which may effectively regulate the uniformity degree of the coating weight of the electrode plate, enhance the stability of the electrode plate, achieve the purpose of regulating the non-Faraday reaction process, improve the transmission efficiency of lithium ions between the positive electrode plate and the negative electrode plate, and thus improve the rate capability of the secondary battery. Excessive particle dispersion degree indicates that the particle size distribution is too wide, which may cause that small particles of the negative electrode active material may be prone to be embedded between large particles of the negative electrode active material, resulting in that the particles of the negative electrode active material are too dense, which affects the embedding and detaching of lithium ions, and thus the cycle and kinetic performance of the negative electrode plate are reduced. In addition, the preparation of the slurry is also more difficult.

When the particle dispersion degree A of the negative electrode active material on the negative electrode plate satisfies the above range, the stability of the negative electrode plate is enhanced, and the rate capability of the secondary battery is improved.

The particle dispersion degree A of the negative electrode active material can be obtained by measuring D99, D10, D50 of the negative electrode active material using a laser particle size analyzer and then calculating. Specifically, a method for obtaining the negative electrode active material from the negative electrode plate may include discharging the secondary battery at a constant current of 0.04 C to a lower voltage limit, disassembling to obtain the negative electrode plate, soaking and cleaning the negative electrode plate with a DMC (dimethyl carbonate) solution, washing with deionized water for a plurality of times, pouring the upper liquid layer, standing and drying the lower solution layer, and finally heat-treating at 800°C for 2 hours under an argon atmosphere to obtain the above test sample.

The negative electrode active material layer has a thickness of C μm, and in some embodiments, C is in the range of 99≤C≤160. Specifically, C is 99, 100, 105, 110, 115, 120, 125, 130, 135, 140, 145, 150, 155, 160, or a range of any two of these numerical values. If the thickness of the negative electrode active material layer is in the above range, the tortuosity and length of migration paths of lithium ions and electrons are less, and thus the lithium ions and electrons have a strong diffusion ability in the negative electrode plate, which further improves the rate capability of the secondary battery. Moreover, the thickness of the negative electrode active material layer may also affect the adhesion between the negative electrode active material layer and the negative electrode current collector, thereby affecting the performance of the negative electrode plate.

In some embodiments, the thickness of the negative electrode active material layer is C μm in a range of 116≤C≤155.

In some embodiments, the thickness of the negative electrode active material layer is C μm in a range of 116≤C≤149. When the thickness C of the negative electrode active material layer satisfies the above range, the diffusion ability of lithium ions in the negative electrode active material layer can be enhanced, so that the secondary battery has high rate capability and energy density.

In some embodiments, the negative electrode active material layer is disposed on one surface of the negative electrode current collector.

In some embodiments, the negative electrode active material layer is disposed on both surfaces of the negative electrode current collector.

When the negative electrode plate has both a region of the single-sided negative electrode active material layer and a region of the double-sided negative electrode active material layer, the thickness of the negative electrode plate is a thickness of the region of the double-sided negative electrode active material layer. The thickness of the negative electrode active material layer can be measured using a micrometer.

In some embodiments, the surface of the negative electrode active material is provided with a first coating layer having a thickness of H1 nm. In some embodiments, a relationship between H1 and Cdl is $10 \leq Cdl \times H1 \leq 250$. Specifically, the value of $Cdl \times H1$ is 10, 15, 20, 25, 30, 35, 40, 45, 50, 55, 60, 65, 70, 75, 80, 85, 90, 95, 100, 110, 120, 130, 140, 150, 160, 170, 180, 190, 200, 210, 220, 230, 240, 250, or a range of any two of these numerical values.

In some embodiments, the surface of the negative electrode active material is provided with a first coating layer having a thickness of H1 nm. In some embodiments the relationship between H1 and Cdl is $20 \leq Cdl \times H1 \leq 230$.

In some embodiments, the surface of the negative electrode active material is provided with a first coating layer having a thickness of H1 nm. In some embodiments the relationship between H1 and Cdl is $31 \leq Cdl \times H1 \leq 210$.

In some embodiments, the thickness of the first coating layer is H1 nm, $5 \leq H1 \leq 200$. Specifically, H1 may be 5, 10, 15, 20, 25, 30, 35, 40, 45, 50, 55, 60, 65, 70, 75, 80, 85, 90, 95, 100, 110, 120, 130, 140, 150, 160, 170, 180, 190, 200, or a range of any two of these numerical values.

In some embodiments, the thickness of the first coating layer is H1 nm, $11 \leq H1 \leq 180$.

In some embodiments, the thickness of the first coating layer is H1 nm, $21 \leq H1 \leq 165$.

In some embodiments, the first coating layer is a carbon coating layer, which can be formed from any of organic resins, asphalt, citric acid, glucose, and hard carbon by a heat treatment process such as sintering.

The preparation of the secondary battery involves a heat treatment process, in which the negative electrode active material is subjected to different degrees of centrifugal extrusion pressure, resulting in, under the action of external force in each direction, internal defect occurring in the negative electrode active material, for example, the interior is relatively loose and easily collapsible. The first coating layer can be used for uniformly coating the particles of the negative electrode active material, and thus the obtained negative electrode active material has strong structural stability. The external coating structure formed by the first coating layer can eliminate the internal defect, improve the diffusion performance of lithium ions therein, reduce the material expansion, and facilitate to improve the electrochemical performance of the secondary battery, such as rate capability and cycle. Furthermore, the carbon coating layer can provide more active sites, reduce the transmission resistance and transmission paths of lithium ions on the surface of the negative electrode active material, facilitate the embedding and detaching of lithium ions, reduce the impedance of the negative electrode active material, and improve the liquid absorption performance, thereby improving the rate capability.

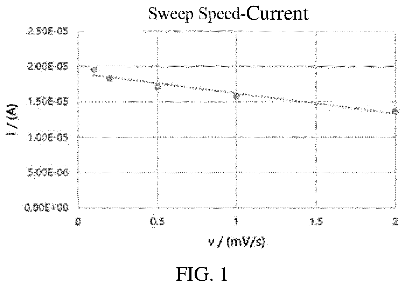

In some embodiments, referring to FIG. 1, a method of testing the non-Faraday capacitance Cdl of the negative electrode plate includes the steps of:

S1. confirmation of a non-Faraday potential interval: the negative electrode plate is assembled into a half battery (referred to as button battery) and subjected to a cyclic voltammetry (CV) test with a voltage in a range of 0.005 V to 3.0 V and a sweep speed of 0.1 mV/s to 1 mV/s, and the non-Faraday potential interval is a straight section of the curve, that is, within an interval of 2V to 3V;

S2. Non-Faraday interval cathode sweep: a potential sub-interval is selected from the potential interval of 2V to 3V confirmed in step S1 to perform a linear sweep voltammetry (LSV) test in a direction from a high potential to a low potential, and then a voltage-current curve is collected, in which the selected potential sub-interval is in an interval of 2.6 V to 2.7 V and the sweep speed is 0.05 mV/s to 5 mV/s;

Further, a median value U V (U=2.65) in the potential interval 2.6 V to 2.7 V is selected at a sweep speed of 0.1 mv/s to obtain a corresponding current value. Then, within the sweep speed of 0.05 mV/s to 5 mV/s, current values corresponding to the median value U at different sweep speeds are selected to generate a sweep speed-current scatter diagram;

S3. calculation of non-Faraday capacitance values: the sweep speed-current scatter diagram acquired in step S2 is fitted to obtain a linear function, and the slope K of the linear function is the non-Faraday capacitance Cdl in the cathode sweep direction of the negative electrode plate.

The method of assembling the button battery is as follows: the obtained negative electrode plate is dried and cut into small round pieces, weighted, transferred to a vacuum oven, dried at 100°C for 8 hours, and then transferred to a glove box filled with argon for half battery assembly. The assembly mode is a conventional assembly mode in the art. The non-Faraday potential interval is confirmed using a cyclic voltammetry curve. Then, the current values at different sweep speeds are determined using a linear voltammetry sweep curve in the potential interval, and finally the non-Faraday capacitance Cdl is obtained by fitting.

In some embodiments, the negative electrode current collector includes, but is not limited to, a metal foil, a metal cylinder, a metal winding, a metal plate, a metal film, a metal plate mesh, a stamped metal, a foamed metal, or the like. In some embodiments, the negative electrode current collector is a metal foil. In some embodiments, the negative electrode current collector is aluminum foil or copper foil. As used herein, the term "copper foil" includes copper alloy foils.

In some embodiments, the negative electrode current collector is a composite current collector including a conductive resin.

In some embodiments, the negative current collector is a film obtained by evaporating copper on a polypropylene film.

In some embodiments, the negative electrode active material layer includes a negative electrode active material, a conductive agent, a binder, and a dispersant.

In some embodiments, the negative electrode active material includes at least one of natural graphite, artificial graphite, hard carbon, soft carbon, mesocarbon microspheres.

In some embodiments, the method of preparing the negative electrode active material comprises the steps of:

Raw materials are subjected to a pretreatment such as crushing and premixing to reach a particle size of 8 $\mu$m to 10 $\mu$m after crushing. The crushed product is subjected to high-temperature graphitization treatment in a protective atmosphere (which is an inert gas) at a temperature of 2800°C to 3000°C, and then left at 3000°C for 30 h to 60 h. The product is then polished and shaped for a period of 4 h to 12 h to smooth the surface of the product particles, and a negative electrode active material having a particle size D50 of 10 $\mu$m to 20 $\mu$m and a grain size XS nm of 0.01 nm to 6 nm is obtained.

In some embodiments, the conductive agent includes one or more of carbon black, graphite, carbon fibers, carbon nanotubes, or graphene.

The binder may enhance adhesion between the negative electrode active materials. The type of the binder is not particularly limited as long as it is a material stable to the electrolyte or the solvent used in the preparation of electrodes.

In some embodiments, the binder includes sodium carboxymethyl cellulose and styrene butadiene rubber.

In some embodiments, the binder includes sodium carboxymethyl cellulose, oxidized starch, and styrene butadiene rubber.

The positive electrode plate includes a positive electrode current collector and a positive electrode active material layer disposed on at least one surface of the positive electrode current collector. The positive electrode active material layer comprises a positive electrode active material.

The positive electrode plate may be a single-sided plate or a double-sided plate. When the positive electrode plate is a single-sided plate, the positive electrode active material layer is provided on one surface of the positive electrode current collector, and when the positive electrode plate is a double-sided plate, the positive electrode active material layer is provided on both surfaces of the positive electrode current collector. Further, the positive electrode plate may have both a region of single-sided positive electrode active material layer and a region of double-sided positive electrode active material layer.

When the positive electrode plate has both the region of the single-sided positive electrode active material layer and the region of the double-sided positive electrode active material layer, the thickness of the positive electrode plate is a thickness of the region of the double-sided positive electrode active material layer.

In some embodiments, the positive electrode active material has a particle dispersion degree of B, 1.0≤B≤5.0. Specifically, B is 1.0, 1.2, 1.5, 1.8, 2.0, 2.3, 2.5, 2.8, 3.0, 3.2, 3.5, 3.8, 4.0, 4.2, 4.5, 4.8, 5.0, or a range of any two of these numerical values.

In some embodiments, the positive electrode active material has a particle dispersion degree of B in the range of 1.3≤B≤4.5.

In some embodiments, the positive electrode active material has a particle dispersion degree of B in the range of 1.9≤B≤3.9.

In some embodiments, the positive electrode active material has a particle dispersion degree of B in the range of 2.1≤B≤3.9.

The particle dispersion degree is equal to (D99-D10)/D50, where D99 denotes the particle size of active material particles having a cumulative volume distribution of 99%, D10 denotes the particle size of active material particles having a cumulative volume distribution of 10%, and D50 denotes the particle size of active material particles having a cumulative volume distribution of 50%. The particle dispersion degree is used for characterizing the dispersion degree of components with various particle sizes. Small particle dispersion degree indicates that the particle size distribution is centralized, the powder disperses well during a stirring process, the slurry is not prone to settling, and the obtained slurry has a good uniformity and stability, which may effectively regulate the uniformity degree of the coating weight of the positive electrode plate, enhance the stability of the positive electrode plate, achieve the purpose of regulating the non-Faraday reaction process, improve the transmission efficiency of lithium ions between the positive electrode plate and the negative electrode plate, and thus improve the rate capability of the secondary battery. Excessive particle dispersion degree indicates that the particle size distribution is too wide, which may cause that small particles of the negative electrode active material may be prone to be embedded between large particles of the negative electrode active material, resulting in that the particles of the negative electrode active material are too dense, which affects the embedding and detaching of lithium ions, and thus the cycle and kinetic performance of the positive electrode plate are reduced. In addition, the preparation of the slurry is also more difficult.

When the particle dispersion degree B of the positive electrode active material on the positive electrode plate satisfies the above range, the stability of the positive electrode plate is enhanced, and the rate capability of the secondary battery is improved.

In some embodiments, a relationship between the particle dispersion degree A of the negative electrode active material and the particle dispersion degree B of the positive electrode active material is 0.1≤AB≤2.5. Specifically, the value of A/B is 0.1, 0.2, 0.3, 0.5, 0.7, 0.8, 1.0, 1.2, 1.5, 1.8, 2.0, 2.3, 2.5, or a range of any two of these numerical values. When the particle dispersion degree A of the negative electrode active material and the particle dispersion degree B of the positive electrode active material satisfy the above range, the negative electrode plate and the positive electrode plate with high tap density can be obtained, and the positive electrode plate and the negative electrode plate both have high transmission performance of electrons and lithium ions, and the transmission efficiency of electrons and lithium ions on the positive electrode plate and the negative electrode plate are more matched, so that the secondary battery has high charging and discharging performance at high rate capability and has high energy density.

In some embodiments, the relationship between the particle dispersion degree A of the negative electrode active material and the particle dispersion degree B of the positive electrode active material satisfies 0.3≤AB≤2.2.

In some embodiments, the relationship between the particle dispersion degree A of the negative electrode active material and the particle dispersion degree B of the positive electrode active material satisfies 0.5≤AB≤1.9.

The particle dispersion degree B of the positive electrode active material on the positive electrode plate can be obtained by directly measuring the particle size of the particles of the positive electrode active material using a laser particle size analyzer and then calculating. Alternatively, the secondary battery may be discharged at a constant current of 0.04 C to a lower voltage limit, disassembled to obtain the positive electrode plate, and soaked and washed with a DMC (dimethyl carbonate) solution, and the positive electrode plate is burned in a muffle furnace at 400°C for 5 hours. The powder is peeled off, washed with deionized water for 2 to 3 times, and left to stand after each washing. The supernatant liquid is poured out, and the lower solution is left to stand, and then dried to obtain a test sample.

In some embodiments, the positive electrode active material layer has a thickness of D μm in the range of 80≤D≤130. Specifically, D is 80, 85, 90, 95, 100, 105, 110, 115, 120, 125, 130, or a range of any two of these numerical values. When both surfaces of the positive electrode current collector are provided with the positive electrode active material layer, D μm is the total thickness of two positive electrode active material layers.

If the thickness of the positive electrode active material layer is in the above range, the tortuosity and length of migration paths of lithium ions and electrons are in a desired range, and thus the lithium ions and electrons have a good diffusion ability in the positive electrode plate, so that the secondary battery has a good rate capability, and it is possible to ensure that the specific capacity and energy density of the secondary battery are in a desired range. The adhesion between the positive electrode active material layer and the positive electrode current collector can be in a desired range, so that the performance of the positive electrode plate is well realized.

In some embodiments, the thickness of the positive electrode active material layer is D μm in the range of 91≤D≤125. When the thickness D of the positive electrode active material layer satisfies the above range, the diffusion ability of lithium ions in the positive electrode active material layer can be enhanced, so that the secondary battery has high rate capability and energy density.

In some embodiments, the thickness of the positive electrode active material layer is D μm in the range of 101≤D≤125.

In some embodiments, a relationship between the thickness C μm of the negative electrode active material layer and the thickness D μm of the positive electrode active material layer is 0.1≤1-(D/C)≤0.5. Specifically, the value of 1-(D/C) is 0.1, 0.15, 0.2, 0.25, 0.3, 0.35, 0.4, 0.45, 0.5, or a range of any two of these numerical values. When the thickness C of the negative electrode active material layer and the thickness D of the positive electrode active material layer satisfy the above range, the electrolyte can sufficiently diffuse in the positive electrode plate and the negative electrode plate, thereby reducing the ohmic impedance of the electrode plate, avoiding lithium precipitation in the negative electrode plate, and ensuring high energy density while improving the kinetic performance of the secondary battery.

In some embodiments, the relationship between the thickness C μm of the negative electrode active material layer and the thickness D μm of the positive electrode active material layer is 0.13≤1-(D/C)≤0.45.

In some embodiments, the relationship between the thickness C μm of the negative electrode active material layer and the thickness D μm of the positive electrode active material layer is 0.17≤1-(D/C)≤0.40.

The surface of the positive electrode active material is provided with a second coating layer having a thickness of H2 nm, and in some embodiments, 5≤H2≤60. Specifically, H2 is 5, 10, 15, 20, 25, 30, 35, 40, 45, 50, 55, 60, or a range of any two of these numerical values.

In some embodiments, the second coating layer contains a coating element including at least one of F, Al, Mg, Ti, or Zr.

In some embodiments, the second coating layer is selected from any one of organic polymers, inorganic metal fluorides, oxides, or lithiated materials.

By coating and modifying the positive electrode active material, the side reaction between the positive electrode active material and the electrolyte can be prevented, thereby avoiding the chemical erosion by the electrolyte, reducing the dissolution of the transition metal, improving the stability of the structure of the positive electrode active material layer, increasing the conductivity of the positive electrode active material layer, and improving the cycle stability and rate capability of the secondary battery.

The positive electrode active material layer may be a single-layer structure or a multiple-layer structure. The multiple positive electrode active material layers may comprise the same or different positive electrode active materials with each other. The positive electrode active material is any substance capable of reversibly embedding and detaching metal ions such as lithium ions.

In some embodiments, the positive electrode active material includes a ternary material, which may include lithium nickel cobalt manganese oxide and/or lithium nickel cobalt aluminum oxide.

In some embodiments, the positive electrode active material includes lithium nickel cobalt manganese oxide, in which the content of the nickel element is greater than or equal to 0.5, based on the mole amounts of the nickel element, the cobalt element, and the manganese element being 1.

In some embodiments, the positive electrode active material includes lithium nickel cobalt manganese oxide, in which the content of the nickel element is less than or equal to 0.85, based on the mole amounts of the nickel element, the cobalt element, and the manganese element being 1.

In some embodiments, the positive electrode active material includes a doping element and/or a coating element.

In addition, the positive electrode active material layer further includes a positive electrode conductive agent and a positive electrode binder.

The type of the positive electrode conductive agent is not limited, and any known conductive agent may be used. Examples of positive electrode conductive agents may include, but are not limited to, carbon materials such as natural graphite, artificial graphite, acetylene black, needle coke; carbon nanotubes; graphene; and the like. The positive electrode conductive agent may be used alone or in any combination.

The type of the solvent used to form the positive electrode material slurry is not limited, as long as the solvent can dissolve or disperse the positive electrode active material, the positive electrode conductive agent, and the positive electrode binder. Examples of the solvent used to form the positive electrode material slurry may include any of an aqueous solvent and an organic solvent. The type of the positive electrode current collector is not particularly limited, and may be any material known to be desirable for use as a positive electrode current collector. Examples of positive electrode current collectors may include, but are not limited to, metals such as aluminum, stainless steel, nickel plating, titanium, tantalum, and other metal materials; carbon materials such as carbon cloth and carbon paper; composite materials formed by polymers and metal layers. In some embodiments, the positive electrode current collector is a metal material. In some embodiments, the positive electrode current collector is aluminum.

The form of the positive electrode current collector is not particularly limited. In some embodiments, the positive electrode current collector is a metal foil. The thickness of the metal foil is not particularly limited. In some embodiments, the thickness of the metal foil is greater than 1 $\mu$m, greater than 3 $\mu$m, or greater than 5 $\mu$m. In some embodiments, the thickness of the metal foil is less than 1 mm, less than 50 $\mu$m, or less than 20 $\mu$m. In some embodiments, the thickness of the metal foil is in the range of any two of the above values.

The electrolyte includes a lithium salt, an organic solvent, and an additive.

In some embodiments, the lithium salt includes at least one of lithium hexafluorophosphate, lithium organoborate, lithium perchlorate, or lithium sulfonimide. The content of the lithium salt is not particularly limited as long as it does not impair the effect of the present disclosure.

In some embodiments, the organic solvent includes a cyclic carbonate and a linear carbonate.

Specifically, the organic solvent is one of ethylene carbonate (EC), diethyl carbonate (DEC), dimethyl carbonate (DMC), propylene carbonate (PC), ethyl methyl carbonate (EMC), or a combination thereof.

In some embodiments, the additive includes at least one of vinylene carbonate, 1,3-propane sultone, lithium difluorophosphate, fluoroethylene carbonate (FEC), lithium difluoro(oxalato)borate, tripropynyl phosphate, triallyl phosphate, or triallyl isocyanurate.

In order to prevent a short circuit, the separator is generally provided between the positive electrode and the negative electrode. In this case, the electrolyte of the present disclosure is generally infiltrated into the separator for use.

An embodiment of the present disclosure further provides a battery pack including the secondary battery described above. As a typical application, the battery pack may be used in, but is not limited to, electronic toys, electronic tools, electromobile, electric automobile, energy storage devices, ships, spacecraft, and other application.

The method of preparing the secondary battery according to the present disclosure is described as follows in connection with specific examples:

Example 1

Preparation of positive electrode plates:

Ternary positive electrode active material $LiNi_{0.8}Co_{0.1}Mn_{0.1}O_2$(NCM811) was added into an aluminum chloride solution, and ammonia water was added to keep the pH of the solution stable. Hydrolysis was performed for 8 h, and then the solution was filtered, washed repeatedly with deionized water and alcohol, dried, and heat-treated in a horizontal kettle at 600°C for 5 h to obtain a positive electrode active material coated with aluminum oxide, with a thickness H2 of 30 nm. The coated ternary positive electrode active material NCM811 was baked at 85°C for 8 hours, mixed with conductive carbon black Super P and polyvinylidene fluoride (PVDF) as a binder at a weight ratio of 96:2:2, and added to N-methyl pyrrolidone (NMP) for high-speed dispersion for 4 hours, and peeled off from the kettle. Then, another NMP was added again therein to adjust the viscosity of the slurry while defoaming, so that the viscosity of the slurry was finally in the range of 2500 to 5000 mPa.s. The obtained positive electrode slurry was uniformly coated on both surfaces of the aluminum foil as the positive electrode current collector, and then dried at 120°C, rolled and cut to obtain the positive electrode plate. The thickness D of the positive electrode active material layer was controlled at 90 $\mu$m.

Preparation of negative electrode plates:

Preparation of the negative electrode active material comprises the following steps. Petroleum coke was subjected to a pretreatment process such as crushing and premixing in a roller mill, and the crushed particles had a particle size of 9 $\mu$m. The crushed product was subjected to a high-temperature graphitization treatment in a protective atmosphere (which is argon) at a temperature of 2900°C, and then left at 3000°C for 48 hours. The product was then polished and shaped in a continuous shaping system for 8 h to smooth the surface of the product particles to obtain an artificial graphite having a particle size D50 of 13 $\mu$m and a grain size XS of 0.5 nm as the negative electrode active material.

The artificial graphite as the negative electrode active material and asphalt as the first coating material were added to a thermal reactor for stirring and mixing for 6 h, and then heat-treated for 2 h at 1200°C under an inert gas atmosphere to obtain the negative electrode active material coated with the first coating layer, in which a thickness H1 of the first coating layer is 77 nm. Then, the negative electrode active material, conductive carbon black Super P, sodium carboxymethyl cellulose as the binder, oxidized starch, and styrene-butadiene rubber were mixed at a weight ratio of 96.5:1.2:1.1:0.2:1.0 to prepare the negative electrode material slurry. Specifically, graphite, carbon black, and 80% of sodium carboxymethyl cellulose were mixed uniformly at a low speed, then the remaining 20% of sodium carboxymethyl cellulose, 50% of oxidized starch, and deionized water were added and dispersed with high-speed stirring for 2h, and then 50% of oxidized starch and styrene-butadiene rubber were added and stirred at a low speed. The viscosity of the slurry was controlled to be in the range of 2500 mPa.s to 4000 mPa.s, and then the slurry was passed through a 200 mesh screen to prepare the negative electrode material slurry. The prepared negative electrode material s slurry was uniformly coated on one side or both sides of the copper foil as the negative electrode current collector, dried in five step at 90°C to 110°C, rolled and cut to obtain the negative electrode plate, and the thickness C of the negative electrode active material layer was controlled at 110 $\mu$m.

Preparation of the electrolyte:

Ethylene carbonate (EC), ethyl methyl carbonate (EMC), and diethyl carbonate (EDC) were mixed at a volume ratio of 1:1:1, and 1 mol/L of LiPF$_6$ was added into the mixture and mixed uniformly to prepare the electrolyte.

Preparation of secondary batteries:

The negative electrode plate and the positive electrode plate prepared by the above steps, after drying, were used to prepare a wound electric core together with a separator by using a winding machine. A positive electrode aluminum tab and a negative electrode nickel-plated copper tab were welded to the electric core, and then the welded electric core was placed into an aluminum-plastic film which has been pouched for packaging, wherein the separator is made of a PP film. Then, a process such as electrolyte injection, formation and grading was performed to prepare the secondary battery.

Non-Faraday capacitance cdl test:

Step 1: the secondary battery prepared in Example 1 was disassembled in a glove box to obtain an electrode plate in "overhang" area of the negative electrode. The electrode plate was soaked in a DMC (dimethyl carbonate) solution, cut and assembled with a metal lithium piece to form a button-type half battery. Alternatively, a negative electrode plate which was not assembled into a battery was taken, cut and assembled with a metal lithium piece to form a button-type half b attery;

Step 2: the button-type half battery was subjected to CV test in a voltage range of 0.005 V to 3.0 V, with a sweep speed of 0.1 mV/s, to confirm the non-Faraday potential interval to be 2.5 V to 2.6 V;

Step 3: LSV test was then performed from 2.6 V to 2.5 V at a sweep speed of 0.1 mV/s, 0.2 mV/s, 0.5 mV/s, 1 mV/s and 2 mV/s, respectively, and a median value 2.55 V of the potential interval was selected to obtain corresponding current values 1.96E-05 A, 1.83E-05 A, 1.71E-05 A, 1.58E-05 A and 1.36E-05 A;

Step 4: a sweep speed-current scatter diagram as shown in FIG. 1 was plotted based on the sweep speed and current values obtained in Step 3, and then fitted to obtain a linear function whose slope -2.86E-06 was the non-Faraday capacitance Cdl (i.e., 2.86nF) of the negative electrode plate in a cathode sweep direction.

The curve of linear sweep voltammetry (LSV) in the non-Faraday reaction interval at different sweep speeds, in which the current varies linearly with the sweep speed, can be used to evaluate the non-Faraday capacitance (Cdl), which plays an important role in characterizing the number of active sites. In a certain range, the Cdl is increased, the number of electrochemical active sites is increased, so that the contact of the negative electrode active material with the electrolyte is facilitated, the ion-electron conduction rate is accelerated, the charge transmission resistance is low, and the rate capability of the secondary battery can be effectively improved.

The "overhang" region of the negative electrode plate refers to a portion of the negative electrode plate that extends beyond the positive electrode plate in the length and width directions.

Examples 2 to 16

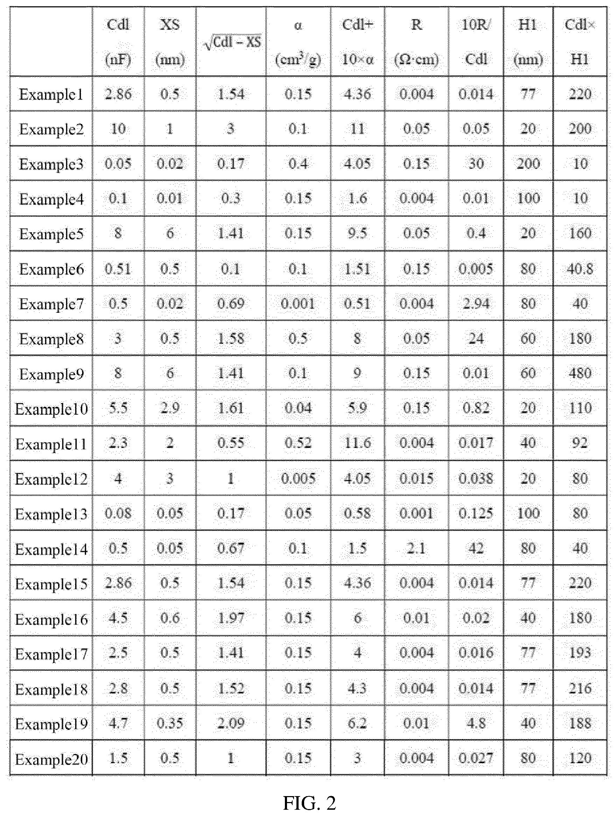

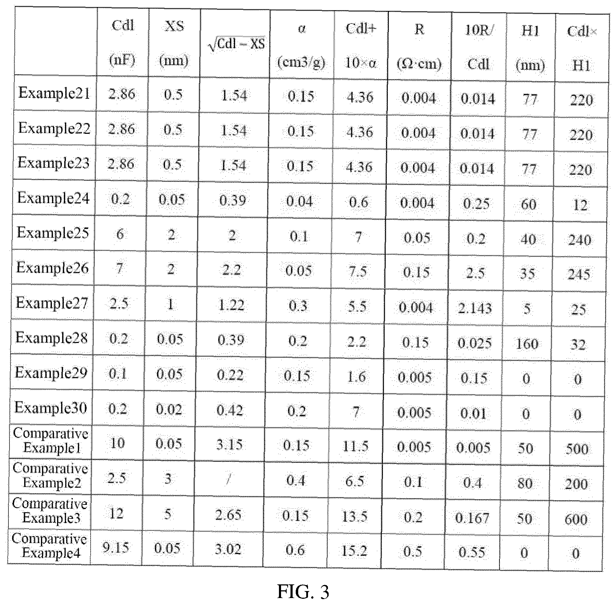

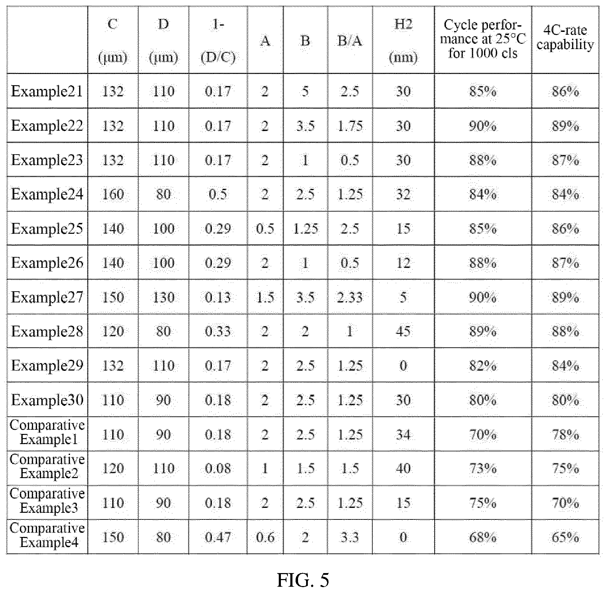

The secondary battery was prepared by the method as described in Example 1, in which the particle size of crushed petroleum coke, the graphitization treatment temperature, the heating temperature, the holding time, and the polishing and shaping time were controlled to control the characteristics of the negative electrode plate and the negative electrode active material to be the values as shown in FIGs. 2 to 5.

Examples 16 to 30

The secondary battery was prepared by the method as described in Example 1, in which the particle size of crushed petroleum coke, the graphitization treatment temperature, the heating temperature, the holding time, and the polishing and shaping time were controlled to control the parameters of the positive electrode plate and the negative electrode plate to be the values as shown in FIGs. 2 to 5.

Comparative Examples 1 to 4

The secondary battery was prepared using the method as described in Example 1, with differences as shown in FIGs. 2 to 5.
The performance test of the prepared secondary battery was as follows:

Grain size XS nm test for the negative electrode active material:

The negative electrode active material prepared in the Examples and Comparative Examples was determined by X-ray diffraction using CuK$\alpha$-rays. The (002) peak attributed to the negative electrode active material in the range of 25° to 27° was analyzed for the diffraction angle 2$\theta$, and then the grain size of the negative electrode active material was calculated by the Scherrer formula. The test results are shown in FIGs. 2 to 3.

Pore volume $\alpha$ cm$^3$/g test for the cathode active material:

The shapes of the negative electrode active materials prepared in the Examples and the Comparative Examples were observed using a scanning electron microscope (SEM), and the pore volumes of the negative electrode active materials prepared in the Examples and the Comparative Examples were measured by a BET 6 point method according to a nitrogen adsorption flow method using a porosity measurement analyzer (Bell Japan Inc, Belsorp-II mini). The test results are shown in FIGs. 2 to 3.

Powder resistivity R $\Omega$·cm Test for the Negative Electrode Active Material:

The negative electrode active material powders prepared in Examples and Comparative Examples were dried, and appropriate amounts of the powders were weighed, respectively, and then tested using a powder resistivity tester (Model: ST2722 form Suzhou lattice electronics Co., Ltd, or UTM7305 from Shenzhen SUNS Technology Stock Co. Ltd.). A dry powder sample was placed in a mold/sample bin of the resistivity tester with a depth of 20 mm and a cross-sectional area of 1 cm$^2$, then pressure was applied slowly from small to large, data was collected manually, and the corresponding powder resistivity test results at different pressure points were recorded. The test results are shown in FIGs. 2 to 3.

Cycle Performance Test for Secondary Batteries:

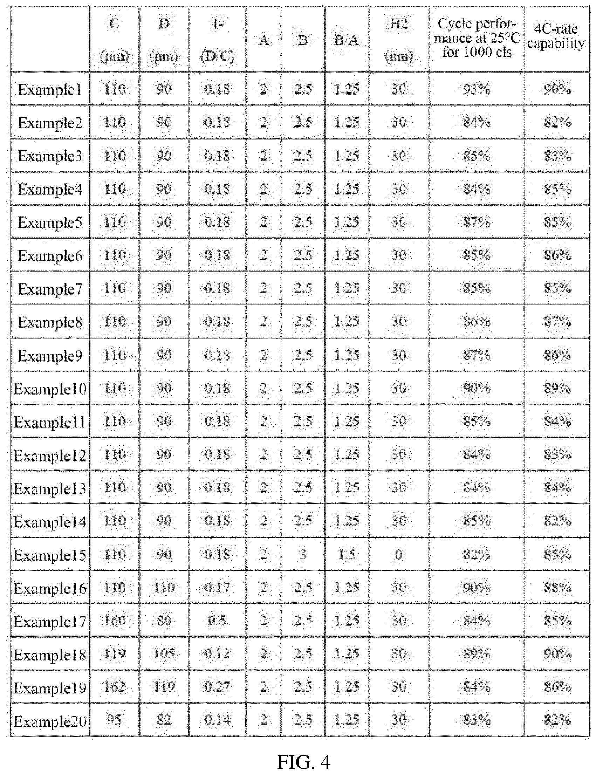

The secondary battery was charged and discharged at 25°C. Specifically, the secondary battery was charged at a constant current of 1C, left standing for 10 minutes, and discharged at a constant current of 1C. The discharge capacity of the first time was recorded, then the battery was subjected to a 1C/1C charging/discharging cycle for 1000 times, and the discharge capacity of the secondary battery of the 1000$^{th}$ time was recorded. The discharge capacity of the battery of the 1000$^{th}$ time was divided by that of the battery of the first time to obtain the capacity retention rate of the secondary battery after the charging/discharging cycle for 1000 times. The test results are shown in FIGs. 4 to 5.

Rate capability Test for Secondary Batteries:

The secondary battery was charged at a large rate at 25°C. Specifically, the secondary battery was discharged at constant current of 1C, left standing for 10 minutes, and charged at constant current of 4C. A discharge capacity of the first time was recorded, and the charge capacity was divided by the discharge capacity of the first time under the charge/discharge of the lithium ion battery at 1C/1C at 25°C to obtain the 4C-rate capability of the secondary battery. The test results are shown in FIGs. 4 to 5.

To facilitate understanding of the present disclosure, the relevant data in Examples 1 to 30 and Comparative Examples 1 to 4 are listed in the present disclosure, as shown in FIGs. 2 to 5. It is to be appreciated by those skilled in the art that the examples are merely illustrative of the present disclosure and should not be construed as limiting the present disclosure.

The value of the non-Faraday capacitance Cdl of the negative electrode plate of the secondary battery affects the number of electrochemical active sites, and in turn affects the contact of the negative electrode active material with the electrolyte. The value of the non-Faraday capacitance Cdl of the negative electrode plate affects the conduction rate of ions and electrons and the charge transmission resistance, which can effectively affect the rate capability of the secondary battery. The grain size XS of the negative electrode active material influences the cycle performance thereof at high voltage and high temperature and the capacity exertion at high current, and this mainly because the grain size of the negative electrode active material influences the actual contact area between the electrode and the electrolyte, influences the transmission distance of ions and electrons and the number of surface reactive active sites, and further influences the non-Faraday reaction strength of the negative electrode plate and the charge transmission resistance, thereby influencing the rate capability of the secondary battery.

Therefore, referring to FIGs. 2 to 5, it can be seen that, by comparing the secondary batteries provided in Examples 1 to 16 and Comparative Example 1, when the value of the non-Faraday capacitance of the negative electrode plate is 0.05 nF to 10 nF and within the range of $0.1 \leq \sqrt{\text{Cdl} - \text{XS}} \leq 3$ defined in the present disclosure, the cycle performance and rate capability of the secondary battery can be effectively improved.

Referring to Comparative Example 1, the difference between the value of the non-Faraday capacitance Cdl of the secondary battery and the grain size XS is excessively large, and $\sqrt{\text{Cdl} - \text{XS}}$ is 3.15, which exceeds the range of $0.1 \leq \sqrt{\text{Cdl} - \text{XS}} \leq 3$ defined in the present disclosure, so that the cycle performance of the secondary battery corresponding to Comparative Example 1 is only 70% at 25°C, and the 4C-rate capability is only 78%. Referring to Comparative Example 2, the difference between the non-Faraday capacitance Cdl of the secondary battery and the grain size XS was negative, resulting in that the cycle performance of the secondary battery corresponding to Comparative Example 2 is only 73% at 25°C and the 4C-rate capability is only 75%. Referring to Comparative Example 3, the value of the non-Faraday capacitance Cdl of the secondary battery is 12 nF, which exceeds the upper limit of the range of 0.05 nF to 10 nF defined in the present disclosure, so that the cycle performance of the secondary battery corresponding to Comparative Example 3 is only 75% at 25°C, and the 4C-rate capability is only 70%.

Referring to Example 11 and Example 16, when the value of the non-Faraday capacitance of the negative electrode plate is 0.05 nF to 10 nF, $0.1 \leq \sqrt{\text{Cdl} - \text{XS}} \leq 3$, and the pore volume $\alpha$ is 0.001 cm$^3$/g to 0.5 cm$^3$/g, there are many active sites on the surface of the negative electrode active material, which facilitates charge exchange of lithium ions on the surface of the negative electrode active material and improves the rate capability of the secondary battery. Moreover, the diffusion of lithium ions into the negative electrode active material is facilitated, the solid-phase conductivity of lithium ions is improved, the impedance of the secondary battery is reduced, and the service life of the secondary battery is prolonged.

Referring to Examples 5 and 10, the value of Cdl+10×α in the secondary battery prepared in Example 5 is 9.5, which exceeds the upper limit of the range of 0.5≤Cdl+10×α≤8 defined in the present disclosure, so that the cycle performance of the secondary battery prepared in Example 5 is 87% at 25°C and the 4C-rate capability is 85%. The value of Cdl+l10×α of the secondary battery prepared in Example 10 is 5.9, which is in the range of 0.5≤Cdl+10×α≤8 provided in the present disclosure, and the cycle performance of the secondary battery prepared in Example 10 at 25°C is 90% and the 4C-rate capability is 89%.

Referring to FIGs. 4 to 5 and Examples 21 to 23, in the secondary battery prepared in Example 21, B/A=2.5, which reaches the upper limit, indicating that the particle dispersion degree of the positive electrode active material in the secondary battery is greatly different from that of the negative electrode active material, the particle size distribution is wide, and small particles of the active material are prone to be embedded between large particles thereof, which may cause the particles of the active material to be too dense among each other, affect embedding and detaching of lithium ions, and affect the cycle performance and kinetic performance of the secondary battery, resulting in that the cycle performance at 25°C and 4C-rate capability of the secondary batteries prepared in Examples 22 and 23 are superior to those of Example 21.

Further, when the thickness C of the negative electrode active material layer and the thickness D of the positive electrode active material layer are in the range of 0.1≤1-(D/C)≤0.5, the electrolyte can sufficiently diffuse in the positive electrode plate and the negative electrode plate, thereby reducing the ohmic impedance of the electrode plates, avoiding lithium precipitation in the negative electrode, and ensuring high energy density while improving the kinetic performance.

Referring to FIGs. 4 to 5, the thickness C of the negative electrode active material layer in the secondary battery prepared in Example 24 is 160 $\mu$m, which is the upper limit of the range defined in the present disclosure, and the thickness D of the positive electrode active material layer is 80 $\mu$m, which is the lower limit of the range defined in the present disclosure, so that the thicknesses satisfy 1-(D/C)=0.5, and the thickness C of the negative electrode active material layer is relatively great, thereby increasing the tortuosity and length of migration paths of lithium ions and electrons, reducing the diffusion ability of the lithium ions and electrons in the negative electrode plate, and reducing the rate capability of the negative electrode plate. When the active material is bonded to at least one surface of the current collector by a binder, the excessive thickness of the active material layer may reduce the adhesion between the active material layer and the current collector, thereby affecting the performance of the electrode plate, resulting in that the secondary battery prepared in Example 24 has a cycle performance of 84% at 25°C and a 4C-rate capability of 84%.

Referring to Example 15 and Example 1, the second coating layer is not coated on the surface of the positive electrode active material in Example 15, that is, H2 is 0, and B/A=1.5 in the secondary battery prepared in Example 15, and thus the secondary battery prepared in Example 15 has a cycle performance of 82% at 25°C and a 4C-rate capability of 85%. In addition, referring to Comparative Example 1 and Example 30, the first coating layer is not coated on the surface of the negative electrode active material in Example 30, that is, H1 is 0, and thus the secondary battery prepared in Example 30 has a cycle performance of 80% at 25°C, and a 4C-rate capability of 80%. These indicate that the coating layer disposed on the negative electrode active material can improve the cycle performance and rate capability of the secondary battery to some extent.

The above embodiments of the present disclosure provides a detailed description of the secondary battery and battery pack. Specific examples are used herein to illustrate the principles and implements of the present disclosure. The description of the above embodiments is merely provided to assist in understanding the method of the present disclosure and the core concepts thereof. Changes will be made to those skilled in the art in both the implements and the scope of application in accordance with the teachings of the present disclosure. In view of the foregoing, the present description should not be construed as limiting the application.

## Claims

1. A secondary battery comprising a negative electrode plate, the negative electrode plate comprising a negative electrode current collector and a negative electrode active material layer disposed on at least one surface of the negative electrode current collector, the negative electrode active material layer comprising a negative electrode active material, the negative electrode active material comprising a carbon material,

   wherein a grain size of the negative electrode active material is XS nm;
   a non-Faraday capacitance of the negative electrode plate is Cdl nF, satisfying $0.05 \leq Cdl \leq 10$; and

   $$0.1 \leq \sqrt{Cdl - XS} \leq 3.$$

2. The secondary battery according to claim 1, wherein XS satisfies $0.01 \leq XS \leq 6$.

3. The secondary battery according to claim 1, wherein the negative electrode active material has a pore volume of $\alpha$ cm$^3$/g, satisfying $0.5 \leq Cdl + 10 \times \alpha \leq 8$.

4. The secondary battery according to claim 1, wherein the negative electrode active material has a pore volume of $\alpha$ cm$^3$/g, satisfying $0.001 \leq \alpha \leq 0.5$.

5. The secondary battery according to claim 1, wherein the negative electrode active material has a powder resistivity of R $\Omega \cdot$cm at 20 KN, satisfying $0.01 \leq 10R/Cd1 \leq 5$.

6. The secondary battery according to claim 1, wherein the negative electrode active material has a powder resistivity of R Q cm at 20KN, satisfying $0.002 \leq R \leq 2$.

7. The secondary battery according to claim 1, wherein the secondary battery further comprises a positive electrode plate, the positive electrode plate comprises a positive electrode current collector and a positive electrode active material layer disposed on at least one surface of the positive electrode current collector, and the positive electrode active material layer comprises a positive electrode active material; and
   the negative electrode active material has a particle dispersion degree of A, satisfying $0.5 \leq A \leq 2.5$.

8. The secondary battery according to claim 7, wherein the positive electrode active material has a particle dispersion degree of B, satisfying $1.0 \leq B \leq 5.0$.

9. The secondary battery according to claim 8, wherein a ratio of B to A satisfies $0.5 \leq B/A \leq 2.5$.

10. The secondary battery according to claim 7, wherein the negative electrode active material layer has a thickness of C $\mu$m, satisfying $99 \ \mu m \leq C \leq 160 \ \mu m$.

**11.** The secondary battery according to claim 10, wherein the positive electrode active material layer has a thickness of D $\mu$m, satisfying 80 $\mu$m$\leq$D$\leq$130 $\mu$m.

**12.** The secondary battery according to claim 11, wherein 0.1$\leq$1-(D/C)$\leq$0.5.

**13.** The secondary battery according to claim 1, wherein a surface of the negative electrode active material is coated with a first coating layer, and the first coating layer has a thickness of H1 nm, satisfying 5$\leq$H1$\leq$200 and 10$\leq$CdI$\times$H1$\leq$250.

**14.** The secondary battery according to claim 7, wherein a surface of the positive electrode active material is coated with a second coating layer, and the second coating layer has a thickness of H2 nm, satisfying 5$\leq$H2$\leq$60.

**15.** A battery pack comprising the secondary battery according to any one of claims 1 to 14.

FIG. 1

| | Cdl (nF) | XS (nm) | $\sqrt{Cdl-XS}$ | α (cm³/g) | Cdl+ 10×α | R (Ω·cm) | 10R/Cdl | H1 (nm) | Cdl× H1 |
|---|---|---|---|---|---|---|---|---|---|
| Example1 | 2.86 | 0.5 | 1.54 | 0.15 | 4.36 | 0.004 | 0.014 | 77 | 220 |
| Example2 | 10 | 1 | 3 | 0.1 | 11 | 0.05 | 0.05 | 20 | 200 |
| Example3 | 0.05 | 0.02 | 0.17 | 0.4 | 4.05 | 0.15 | 30 | 200 | 10 |
| Example4 | 0.1 | 0.01 | 0.3 | 0.15 | 1.6 | 0.004 | 0.01 | 100 | 10 |
| Example5 | 8 | 6 | 1.41 | 0.15 | 9.5 | 0.05 | 0.4 | 20 | 160 |
| Example6 | 0.51 | 0.5 | 0.1 | 0.1 | 1.51 | 0.15 | 0.005 | 80 | 40.8 |
| Example7 | 0.5 | 0.02 | 0.69 | 0.001 | 0.51 | 0.004 | 2.94 | 80 | 40 |
| Example8 | 3 | 0.5 | 1.58 | 0.5 | 8 | 0.05 | 24 | 60 | 180 |
| Example9 | 8 | 6 | 1.41 | 0.1 | 9 | 0.15 | 0.01 | 60 | 480 |
| Example10 | 5.5 | 2.9 | 1.61 | 0.04 | 5.9 | 0.15 | 0.82 | 20 | 110 |
| Example11 | 2.3 | 2 | 0.55 | 0.52 | 11.6 | 0.004 | 0.017 | 40 | 92 |
| Example12 | 4 | 3 | 1 | 0.005 | 4.05 | 0.015 | 0.038 | 20 | 80 |
| Example13 | 0.08 | 0.05 | 0.17 | 0.05 | 0.58 | 0.001 | 0.125 | 100 | 80 |
| Example14 | 0.5 | 0.05 | 0.67 | 0.1 | 1.5 | 2.1 | 42 | 80 | 40 |
| Example15 | 2.86 | 0.5 | 1.54 | 0.15 | 4.36 | 0.004 | 0.014 | 77 | 220 |
| Example16 | 4.5 | 0.6 | 1.97 | 0.15 | 6 | 0.01 | 0.02 | 40 | 180 |
| Example17 | 2.5 | 0.5 | 1.41 | 0.15 | 4 | 0.004 | 0.016 | 77 | 193 |
| Example18 | 2.8 | 0.5 | 1.52 | 0.15 | 4.3 | 0.004 | 0.014 | 77 | 216 |
| Example19 | 4.7 | 0.35 | 2.09 | 0.15 | 6.2 | 0.01 | 4.8 | 40 | 188 |
| Example20 | 1.5 | 0.5 | 1 | 0.15 | 3 | 0.004 | 0.027 | 80 | 120 |

FIG. 2

| | Cdl (nF) | XS (nm) | $\sqrt{Cdl-XS}$ | $\alpha$ (cm3/g) | Cdl+ $10\times\alpha$ | R ($\Omega\cdot$cm) | 10R/ Cdl | H1 (nm) | Cdl× H1 |
|---|---|---|---|---|---|---|---|---|---|
| Example21 | 2.86 | 0.5 | 1.54 | 0.15 | 4.36 | 0.004 | 0.014 | 77 | 220 |
| Example22 | 2.86 | 0.5 | 1.54 | 0.15 | 4.36 | 0.004 | 0.014 | 77 | 220 |
| Example23 | 2.86 | 0.5 | 1.54 | 0.15 | 4.36 | 0.004 | 0.014 | 77 | 220 |
| Example24 | 0.2 | 0.05 | 0.39 | 0.04 | 0.6 | 0.004 | 0.25 | 60 | 12 |
| Example25 | 6 | 2 | 2 | 0.1 | 7 | 0.05 | 0.2 | 40 | 240 |
| Example26 | 7 | 2 | 2.2 | 0.05 | 7.5 | 0.15 | 2.5 | 35 | 245 |
| Example27 | 2.5 | 1 | 1.22 | 0.3 | 5.5 | 0.004 | 2.143 | 5 | 25 |
| Example28 | 0.2 | 0.05 | 0.39 | 0.2 | 2.2 | 0.15 | 0.025 | 160 | 32 |
| Example29 | 0.1 | 0.05 | 0.22 | 0.15 | 1.6 | 0.005 | 0.15 | 0 | 0 |
| Example30 | 0.2 | 0.02 | 0.42 | 0.2 | 7 | 0.005 | 0.01 | 0 | 0 |
| Comparative Example1 | 10 | 0.05 | 3.15 | 0.15 | 11.5 | 0.005 | 0.005 | 50 | 500 |
| Comparative Example2 | 2.5 | 3 | / | 0.4 | 6.5 | 0.1 | 0.4 | 80 | 200 |
| Comparative Example3 | 12 | 5 | 2.65 | 0.15 | 13.5 | 0.2 | 0.167 | 50 | 600 |
| Comparative Example4 | 9.15 | 0.05 | 3.02 | 0.6 | 15.2 | 0.5 | 0.55 | 0 | 0 |

FIG. 3

| | C (μm) | D (μm) | 1-(D/C) | A | B | B/A | H2 (nm) | Cycle perfor-mance at 25°C for 1000 cls | 4C-rate capability |
|---|---|---|---|---|---|---|---|---|---|
| Example1 | 110 | 90 | 0.18 | 2 | 2.5 | 1.25 | 30 | 93% | 90% |
| Example2 | 110 | 90 | 0.18 | 2 | 2.5 | 1.25 | 30 | 84% | 82% |
| Example3 | 110 | 90 | 0.18 | 2 | 2.5 | 1.25 | 30 | 85% | 83% |
| Example4 | 110 | 90 | 0.18 | 2 | 2.5 | 1.25 | 30 | 84% | 85% |
| Example5 | 110 | 90 | 0.18 | 2 | 2.5 | 1.25 | 30 | 87% | 85% |
| Example6 | 110 | 90 | 0.18 | 2 | 2.5 | 1.25 | 30 | 85% | 86% |
| Example7 | 110 | 90 | 0.18 | 2 | 2.5 | 1.25 | 30 | 85% | 85% |
| Example8 | 110 | 90 | 0.18 | 2 | 2.5 | 1.25 | 30 | 86% | 87% |
| Example9 | 110 | 90 | 0.18 | 2 | 2.5 | 1.25 | 30 | 87% | 86% |
| Example10 | 110 | 90 | 0.18 | 2 | 2.5 | 1.25 | 30 | 90% | 89% |
| Example11 | 110 | 90 | 0.18 | 2 | 2.5 | 1.25 | 30 | 85% | 84% |
| Example12 | 110 | 90 | 0.18 | 2 | 2.5 | 1.25 | 30 | 84% | 83% |
| Example13 | 110 | 90 | 0.18 | 2 | 2.5 | 1.25 | 30 | 84% | 84% |
| Example14 | 110 | 90 | 0.18 | 2 | 2.5 | 1.25 | 30 | 85% | 82% |
| Example15 | 110 | 90 | 0.18 | 2 | 3 | 1.5 | 0 | 82% | 85% |
| Example16 | 110 | 110 | 0.17 | 2 | 2.5 | 1.25 | 30 | 90% | 88% |
| Example17 | 160 | 80 | 0.5 | 2 | 2.5 | 1.25 | 30 | 84% | 85% |
| Example18 | 119 | 105 | 0.12 | 2 | 2.5 | 1.25 | 30 | 89% | 90% |
| Example19 | 162 | 119 | 0.27 | 2 | 2.5 | 1.25 | 30 | 84% | 86% |
| Example20 | 95 | 82 | 0.14 | 2 | 2.5 | 1.25 | 30 | 83% | 82% |

FIG. 4

| | C (μm) | D (μm) | 1-(D/C) | A | B | B/A | H2 (nm) | Cycle performance at 25°C for 1000 cls | 4C-rate capability |
|---|---|---|---|---|---|---|---|---|---|
| Example21 | 132 | 110 | 0.17 | 2 | 5 | 2.5 | 30 | 85% | 86% |
| Example22 | 132 | 110 | 0.17 | 2 | 3.5 | 1.75 | 30 | 90% | 89% |
| Example23 | 132 | 110 | 0.17 | 2 | 1 | 0.5 | 30 | 88% | 87% |
| Example24 | 160 | 80 | 0.5 | 2 | 2.5 | 1.25 | 32 | 84% | 84% |
| Example25 | 140 | 100 | 0.29 | 0.5 | 1.25 | 2.5 | 15 | 85% | 86% |
| Example26 | 140 | 100 | 0.29 | 2 | 1 | 0.5 | 12 | 88% | 87% |
| Example27 | 150 | 130 | 0.13 | 1.5 | 3.5 | 2.33 | 5 | 90% | 89% |
| Example28 | 120 | 80 | 0.33 | 2 | 2 | 1 | 45 | 89% | 88% |
| Example29 | 132 | 110 | 0.17 | 2 | 2.5 | 1.25 | 0 | 82% | 84% |
| Example30 | 110 | 90 | 0.18 | 2 | 2.5 | 1.25 | 30 | 80% | 80% |
| Comparative Example1 | 110 | 90 | 0.18 | 2 | 2.5 | 1.25 | 34 | 70% | 78% |
| Comparative Example2 | 120 | 110 | 0.08 | 1 | 1.5 | 1.5 | 40 | 73% | 75% |
| Comparative Example3 | 110 | 90 | 0.18 | 2 | 2.5 | 1.25 | 15 | 75% | 70% |
| Comparative Example4 | 150 | 80 | 0.47 | 0.6 | 2 | 3.3 | 0 | 68% | 65% |

FIG. 5

| INTERNATIONAL SEARCH REPORT | International application No. |
|---|---|
| | **PCT/CN2023/115701** |

**A. CLASSIFICATION OF SUBJECT MATTER**

H01M 4/133(2010.01)i; H01M 4/587(2010.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS, CNTXT, DWPI, ENTXT, CNKI: 电池, 电极, 反应面积, 有效面积, 负极, 阳极, 法拉, 双电层, 双层, 电容, 晶粒, 晶体, 微晶, 粒径, 粒度, 密度, 直径, 尺寸, farad+, secondary battery, cathode, carbon material, electric double layer, crystal, grain, mF, μF, nF, energy density

**C. DOCUMENTS CONSIDERED TO BE RELEVANT**

| Category* | Citation of document, with indication, where appropriate, of the relevant passages | Relevant to claim No. |
|---|---|---|
| PX | CN 115763703 A (SUNWODA ELECTRIC VEHICLE CELL CO., LTD.) 07 March 2023 (2023-03-07) entire document | 1-15 |
| Y | CN 115528206 A (SUNWODA ELECTRIC VEHICLE CELL CO., LTD.) 27 December 2022 (2022-12-27) description, paragraphs 5-18 | 1-15 |
| Y | CN 108475587 A (ASAHI KASEI CORP.) 31 August 2018 (2018-08-31) description, paragraphs 294-302 and 849 | 1-15 |
| A | CN 103715451 A (TOYOTA MOTOR CORPORATION) 09 April 2014 (2014-04-09) entire document | 1-15 |
| A | CN 110998929 A (SHIN-ETSU CHEMICAL CO., LTD.) 10 April 2020 (2020-04-10) entire document | 1-15 |
| A | JP 2003272621 A (MITSUBISHI CHEMICALS CORP.) 26 September 2003 (2003-09-26) entire document | 1-15 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 October 2023** | **02 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/115701** |

**C. DOCUMENTS CONSIDERED TO BE RELEVANT**

| Category* | Citation of document, with indication, where appropriate, of the relevant passages | Relevant to claim No. |
|---|---|---|
| A | JP 2008010316 A (SHARP K. K.) 17 January 2008 (2008-01-17)<br>description, paragraphs 14-36 | 1-15 |
| A | JP 2018056425 A (ASAHI KASEI CORP.) 05 April 2018 (2018-04-05)<br>entire document | 1-15 |
| A | US 2017283916 A1 (ISHIHARA CHEMICAL CO., LTD.) 05 October 2017 (2017-10-05)<br>description, paragraphs 24-32 | 1-15 |
| A | WO 2013099280 A1 (PANASONIC CORP.) 04 July 2013 (2013-07-04)<br>entire document | 1-15 |

Form PCT/ISA/210 (second sheet) (July 2022)

International application No.

**PCT/CN2023/115701**

| Patent document cited in search report | | | Publication date (day/month/year) | Patent family member(s) | | | Publication date (day/month/year) |
|---|---|---|---|---|---|---|---|
| CN | 115763703 | A | 07 March 2023 | None | | | |
| CN | 115528206 | A | 27 December 2022 | None | | | |
| CN | 108475587 | A | 31 August 2018 | WO | 2017126698 | A1 | 27 July 2017 |
| | | | | KR | 20180085046 | A | 25 July 2018 |
| | | | | KR | 102007130 | B1 | 01 October 2019 |
| | | | | JP | 2018061037 | A | 12 April 2018 |
| | | | | EP | 3392895 | A1 | 24 October 2018 |
| | | | | EP | 3392895 | A4 | 06 March 2019 |
| | | | | EP | 3392895 | B1 | 11 March 2020 |
| | | | | US | 2019027321 | A1 | 24 January 2019 |
| | | | | US | 10468199 | B2 | 05 November 2019 |
| | | | | JP | 6227837 | B1 | 08 November 2017 |
| | | | | JPWO | 2017126698 | A1 | 25 January 2018 |
| | | | | TW | 201740404 | A | 16 November 2017 |
| | | | | TWI | 628680 | B | 01 July 2018 |
| CN | 103715451 | A | 09 April 2014 | JP | 2014078360 | A | 01 May 2014 |
| | | | | JP | 5729613 | B2 | 03 June 2015 |
| | | | | US | 2014099555 | A1 | 10 April 2014 |
| CN | 110998929 | A | 10 April 2020 | WO | 2019026550 | A1 | 07 February 2019 |
| | | | | JP | 2019029297 | A | 21 February 2019 |
| | | | | JP | 6964386 | B2 | 10 November 2021 |
| | | | | TW | 201911629 | A | 16 March 2019 |
| | | | | KR | 20200037221 | A | 08 April 2020 |
| | | | | EP | 3664198 | A1 | 10 June 2020 |
| | | | | EP | 3664198 | A4 | 21 April 2021 |
| | | | | US | 2021028447 | A1 | 28 January 2021 |
| | | | | US | 11316152 | B2 | 26 April 2022 |
| JP | 2003272621 | A | 26 September 2003 | None | | | |
| JP | 2008010316 | A | 17 January 2008 | None | | | |
| JP | 2018056425 | A | 05 April 2018 | None | | | |
| US | 2017283916 | A1 | 05 October 2017 | JPWO | 2016038711 | A1 | 29 June 2017 |
| | | | | JP | 6353912 | B2 | 04 July 2018 |
| | | | | WO | 2016038711 | A1 | 17 March 2016 |
| | | | | US | 10329644 | B2 | 25 June 2019 |
| | | | | EP | 3192595 | A1 | 19 July 2017 |
| | | | | EP | 3192595 | A4 | 04 April 2018 |
| | | | | EP | 3192595 | B1 | 17 April 2019 |
| WO | 2013099280 | A1 | 04 July 2013 | JP | 2015046221 | A | 12 March 2015 |

Form PCT/ISA/210 (patent family annex) (July 2022)

**EP 4 421 899 A1**

**Patent documents cited in the description**

- CN 202310030037
- GB 399782021 T